# EUROPEAN PATENT APPLICATION

(11) **EP 2 244 071 A2**
(43) Date of publication of application: **27.10.2010**
(21) Application number: 10160433.8
(22) Date of filing: 20.04.2010
(51) Int. Cl.: G01D 5/347, G01D 5/36

(54) **Photoelectric encoder and method for controlling operation of the same**

(30) Priority: 22.04.2009 JP 2009104095
(71) Applicant: Mitutoyo Corporation, Kawasaki, Kanagawa 213-8533 (JP)
(72) Inventor: Tominaga, Atsushi, Kawasaki Kanagawa 213-8533 (JP)
(74) Representative: Skone James, Robert Edmund

(57) **Abstract**

A photoelectric encoder includes: a scale provided with a first optical grating; a detector unit opposed to the scale; and a light source integrated with the scale, the light source emitting light to be modulated by the first optical grating and received by the detector unit.

## Description

### BACKGROUND

### 1. Field of the Invention

The present invention relates to a photoelectric encoder including a scale provided with an optical grating, and a detector unit disposed face to face with the scale, and a method of controlling the operation of the photoelectric encoder. Particularly, it relates to a photoelectric encoder using a small-size detector unit to make accurate measurement possible, and a method of controlling the operation of the photoelectric encoder.

### 2. Description of the Related Art

A photoelectric encoder which has a scale provided with an optical grating, and a detector unit disposed face to face with the scale, has been heretofore used in various types of machine tools, measuring devices, etc. The photoelectric encoder has an illuminating system and a detecting system mainly provided in the detector unit. The illuminating system has a light source for illuminating the scale, an electric circuit for the light source, and an optical system for illumination. The detecting system has a photo acceptance element for detecting a signal from the scale, an electric circuit for the photo acceptance element, and an optical system for detection.

For example, a photoelectric encoder 1 described in JP-A-2003-161646 as shown in Fig. 11 has a reflective scale 10 including a predetermined optical grating 12 formed thereon, a sheet light source 20 which emits light for illuminating the scale 10, and a photo acceptance module 30 provided with array type photo acceptance elements 30A and 30B disposed near the sheet light source 20. In such a photoelectric encoder 1, the sheet light source 20 and the photo acceptance module 30 are disposed to form a detector unit. That is, an illuminating system (sheet light source) and a detecting system (array type photo acceptance elements) are disposed in one detector unit so that the arrangement of the scale and the illuminating system (sheet light source) and the arrangement of the scale and the detecting system (array type photo acceptance elements) are determined.

In a photoelectric encoder described in JP-A-H05-248895, light-emitting diodes are provided in a read head formed from a single semiconductor substrate. That is, in JP-A-H05-248895, an illuminating system (light-emitting diodes) and a detecting system are housed (disposed) in one detector unit in the same manner as in JP-A-2003-161646.

Mechanical, optical and thermal characteristics however had an influence on one another when the illuminating system and the detecting system were disposed in one detector unit as described in Patent Documents 1 and 2.

For this reason, these characteristics had to be adjusted mutually and it was necessary to trade off these characteristics on design. That is, because there was some case where it was difficult to form a photoelectric encoder by disposing the illuminating system and the detecting system in one detector unit ideally, there was a possibility that the final performance of the photoelectric encoder might be affected.

### SUMMARY

The present invention is accomplished to solve the problem in the background art. The invention is to provide a photoelectric encoder which can use a small-size detector unit and in which robust and accurate measurement can be made while thermal strain of the detector unit caused by a light source can be avoided, and a method of controlling the operation of the photoelectric encoder.

According to an aspect of the invention, there is provided a photoelectric encoder including: a scale provided with a first optical grating; a detector unit opposed to the scale; and a light source integrated with the scale, the light source emitting light to be modulated by the first optical grating and received by the detector unit.

The light source may be a sheet light source.

The sheet light source may be made of EL elements.

The sheet light source may be a diffusive light source which is formed so that light emitted from a point light source or a linear light source provided at an end portion of the scale is guided by a light guide unit and diffused.

The first optical grating may include the sheet light source.

The photoelectric encoder may further include a control unit configured to control the light source so that only a portion opposed to the detector unit emits light.

The detector unit may include: a second optical grating configured to modulate light modulated by the first optical grating; and a photo acceptance element configured to receive the light modulated by the second optical grating.

The detector unit may include: a lens configured to collect and converge light modulated by the first optical grating; and a photo acceptance element configured to receive the light collected and converged by the lens.

The photo acceptance element may be an array type photo acceptance element made from a plurality of pixels.

The photoelectric encoder may further include an optical grating configured to shield a part of light at regular intervals, the optical grating being provided separately from the photo acceptance element.

According to another aspect of the invention, there is provided a method for controlling an operation of a photoelectric encoder including a scale provided with a first optical grating, and a detector unit opposed to the scale, the method including: providing a light source integrated with the scale; and controlling the light source so that only a portion opposed to the detector unit emits light.

According to the invention, there is no light source provided in the detector unit, so that the detector unit can be provided as a small-size detector unit while heat due to the light source can be eliminated from the detector unit. Accordingly, thermal strain of the detecting system due to the light source can be avoided so that accurate measurement can be made.

Moreover, because the scale per se emits light, tolerance to alignment of the scale with the detector unit can be enlarged so that a robust photoelectric encoder can be achieved.

### BRIEF DESCRIPTION OF THE DRAWINGS

The present invention will become more fully understood from the detailed description given hereinbelow and the accompanying drawing which is given by way of illustration only, and thus is not limitative of the present invention and wherein:
Fig. 1 is a schematic view of a photoelectric encoder according to a first embodiment of the invention;
Fig. 2 is a schematic view showing the configuration of a sheet light source of the photoelectric encoder;
Fig. 3 is a schematic view showing a section of a scale of the photoelectric encoder;
Fig. 4 is a schematic view showing the configuration of a detector unit of the photoelectric encoder;
Fig. 5 is a schematic view of a scale of a photoelectric encoder according to a second embodiment of the invention;
Fig. 6 is a schematic view of a scale of a photoelectric encoder according to a third embodiment of the invention;
Fig. 7 is a schematic view showing the configuration of a sheet light source of a photoelectric encoder according to a fourth embodiment of the invention;
Fig. 8 is a schematic view showing the configuration of a detector unit of a photoelectric encoder according to a fifth embodiment of the invention;
Fig. 9 is a schematic view showing the configuration of a detector unit of a photoelectric encoder according to a sixth embodiment of the invention;
Fig. 10 is a schematic view showing the configuration of a detector unit of a photoelectric encoder according to a seventh embodiment of the invention; and
Fig. 11 is a schematic view showing the configuration of a photoelectric encoder according to an example of the background art.

### DETAILED DESCRIPTION OF THE INVENTION

Embodiments of the invention will be described below in detail with reference to the drawings by way of examples.

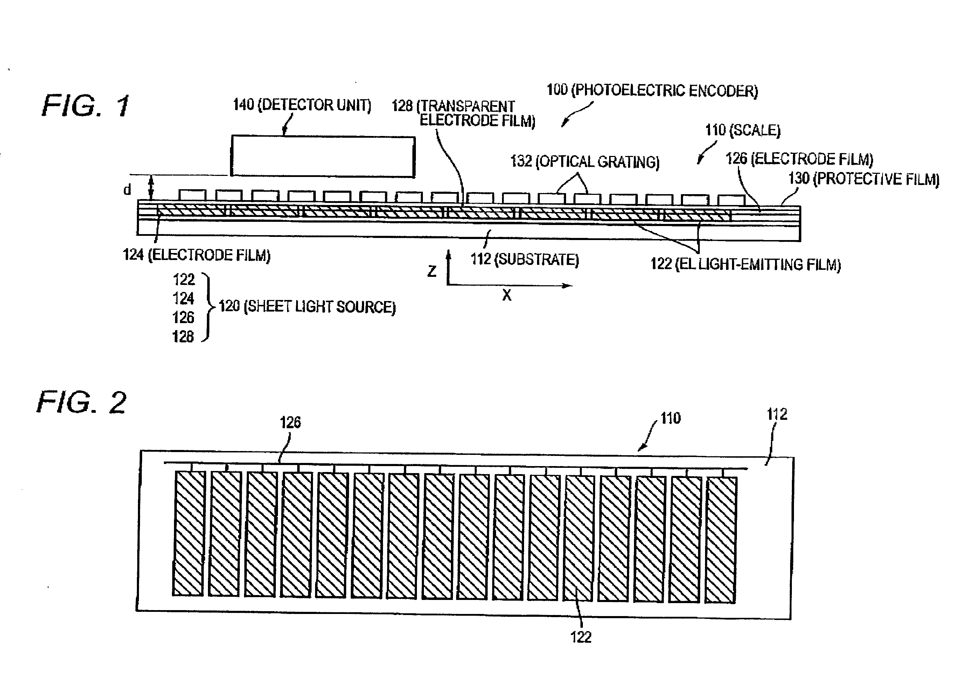

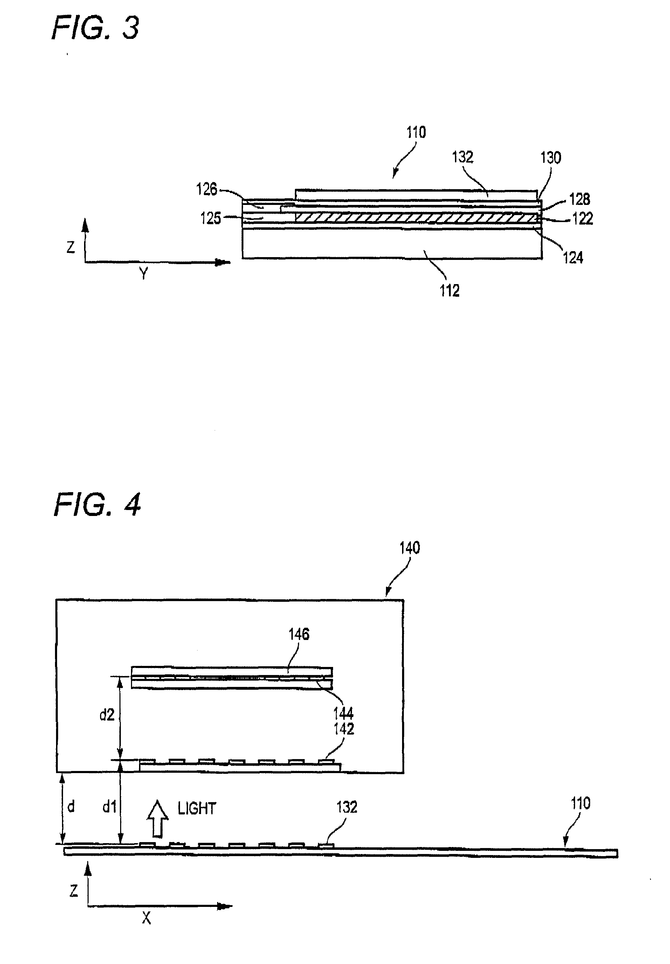

A first embodiment of the invention will be described with reference to Figs. 1 to 4. Fig. 1 is a schematic view of a photoelectric encoder according to this embodiment. Fig. 2 is a schematic view showing the configuration of a sheet light source of the photoelectric encoder. Fig. 3 is a schematic view showing a section of a scale of the photoelectric encoder. Fig. 4 is a schematic view showing the configuration of a detector unit of the photoelectric encoder. This embodiment shows a photoelectric encoder to which a position detecting theory using three optical gratings (referred to as three-grating theory) is applied.

The configuration of the photoelectric encoder according to this embodiment will be described first.

As shown in Fig. 1, the photoelectric encoder 100 has a scale 110 provided with a first optical grating 132, and a detector unit 140 disposed face to face with the scale 110.

As shown in Fig. 1, the scale 110 has a sheet light source 120 formed on a substrate 112. A protective film 130 and the first optical grating 132 are further formed on the sheet light source 120. That is, the scale 110 serves as a self-luminous scale which is formed so that the sheet light source 120 emitting light to be modulated by the first optical grating 132 is provided so as to be integrated with the scale 110. Conversely, the sheet light source 120 is provided so as to be integrated with the scale 110 and face to face with the detector unit 140.

As shown in Figs. 1 and 2, the sheet light source 120 has EL light-emitting films 122, electrode films 124 and 126, and transparent electrode films 128. That is, the sheet light source 120 is made of EL elements. (Incidentally, the light source need not be a sheet light source or the sheet light source need not be made of EL elements.) The electrode film 124 is formed uniformly on the substrate 112. The EL light-emitting films 122 each shaped like a strip are formed on the electrode film 124 so as to be arranged side by side with one another in a direction X of a measurement axis. The transparent films 128 made of ITO or the like are formed on upper surfaces of the EL light-emitting films 122 respectively.

As shown in Fig. 3, insulating films 125 substantially having the same thickness of the EL light-emitting films 122 are formed on the electrode film 124. The electrode films 126 serving as wiring are formed on the insulating films 125, so that the transparent electrode films 128 are electrically connected to the electrode films 126. Accordingly, the electrode films 124 and 126 do not short-circuit to each other but all the electrode films 126 are electrically connected on the one-end side of the EL light-emitting films 122 as shown in Fig. 2, so that the EL light-emitting films 122 are driven simultaneously. Incidentally, the EL light-emitting films 122 and the transparent electrode films 128 may be replaced by a single EL light-emitting film and a single transparent electrode film respectively.

As shown in Fig. 1, the protective film 130 which is optically transparent is formed on the electrode films 126 and the transparent electrode films 128. The first optical grating 132 is formed on the protective film 130. The first optical grating 132 has a plurality of light-shielding patterns arranged at regular intervals in the direction X of the measurement axis.

Incidentally, as shown in Fig. 1, the light-shielding pattern portions of the first optical grating 132 are arranged just between the EL light-emitting films 122. The first optical grating 132 is formed so that each light-shielding pattern portion has a sufficient width to cover a gap between adjacent ones of the EL light-emitting films 122. Accordingly, when the EL light-emitting films 122 are made to emit light, the same situation as the whole surface of the first optical grating 132 is illuminated with uniform light can be produced though the EL light-emitting films 122 are provided as divided portions shaped like a plurality of strips. Light emitted from the sheet light source 120 is modulated (partially shielded) by the first optical grating 132. Although this embodiment shows the case where the width of each EL light-emitting film 122 is about twice as large as the width of the first optical grating 132 as shown in Fig. 1, the invention is not limited thereto.

As shown in Fig. 1, the detector unit 140 is disposed face to face with the scale 110 at a predetermined distance d in a Z direction. As shown in Fig. 4, the detector unit 140 has a second optical grating 142, and a photo acceptance element 146. The second optical grating 142 is disposed face to face with the first optical grating 132 on the scale 110 at a distance d1. The second optical grating 142 has a plurality of light-shielding patterns arranged at regular intervals in the direction X of the measurement axis like the first optical grating 132. Accordingly, light emitted from the sheet light source 120 and modulated by the first optical grating 132 is further modulated by the second optical grating 142 in accordance with change in positional relation between the first and second optical gratings 132 and 142.

The photo acceptance element 146 is disposed at a distance d2 (upside of the Z axis in Fig. 4) from the second optical grating 142. An optical grating 144 by which part of light modulated by the second optical grating 142 is shielded at regular intervals is provided separately on a surface of the photo acceptance element 146. Accordingly, light which has passed through the optical grating 144 is received by the photo acceptance element 146 and output as a signal from the photo acceptance element 146. The output signal is processed by a processing system not shown, so that the position of the scale 110 relative to the detector unit 140 is obtained based on the detected light intensity.

Incidentally, in this embodiment, each of the first optical grating 132, the second optical grating 142 and the optical grating 144 has light-shielding patterns arranged at regular intervals. The distances d1 and d2 are set to be equal to each other (d1=d2). The second optical grating 142 is separated into two rows in a direction Y (depth direction in Fig. 4) perpendicular to the direction X of the measurement axis of the detector unit 140. The two rows are disposed at a distance shifted by 90 degrees from each other. The photo acceptance element 146 is separated into two parts accordingly, so that outputs different by 90 degrees in phase (sinusoidal wave signals) can be obtained from the two parts of the photo acceptance element 146 respectively. Accordingly, the direction of movement of the scale 110 and the position of the scale 110 relative to the detector unit 140 can be measured accurately based on the two phase outputs.

As described above, displacement of the relative position can be detected theoretically as long as there are two phase sinusoidal wave signals having a phase difference of 90 degrees. However, the second optical grating 142 and the photo acceptance element 146 can be disposed and configured so that four phase sinusoidal wave signals having a phase difference of 90 degrees from one another, inclusive of reverse phases, are detected and processed to obtain two phase sinusoidal wave signals having a phase difference of 90 degrees for the purposes of improving an S/N ratio and improving resolving power.

Controlling the operation of the photoelectric encoder 100 according to this embodiment will be described next with reference to Fig. 1.

First, a voltage is applied between the electrode films 124 and 126 so that a current flows into each EL light-emitting film 122. As a result, each EL light-emitting film 122 emits light. The output light based on the light emission is modulated (partially shielded) by the first optical grating 132 formed on the upper surface of the scale 110.

The modulated light is further modulated by the second optical grating 142 of the detector unit 140, so that the modulated light forms bright and dark patterns on the photo acceptance element 146 (optical grating 144). On this occasion, light which has passed through the optical grating 144 separately provided on the surface of the photo acceptance element 146 is received by the photo acceptance element 146 and output from the photo acceptance element 146. In a processing system not shown, the position of the scale 110 relative to the detector unit 140 is calculated based on the obtained light intensity.

In this embodiment, because the EL light-emitting films 122 are provided as a plurality of strips, the total area of the EL light-emitting films 122 can be reduced. Accordingly, low cost and low power consumption can be obtained compared with the case where an EL light-emitting film is formed on the whole surface.

Moreover, because the sheet light source 120 is made of EL light-emitting films 122 (EL elements), high luminance can be obtained. Accordingly, even when dirt is deposited on the surface of the scale 110, the photoelectric encoder 100 excellent in environmental resistance can be achieved because the influence of the dirt on light modulated by the first optical grating 132 can be reduced.

Moreover, in this embodiment, because there is no lens used inside the detector unit 140, the size and cost of the detector unit 140 can be reduced.

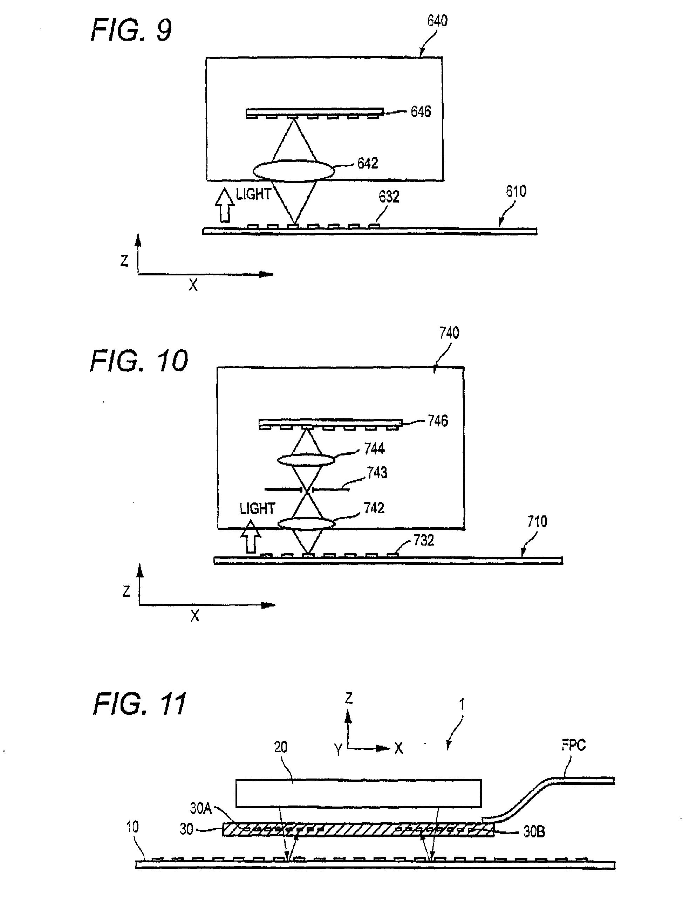

As described above, the detector unit 140 has only a detecting system for receiving light modulated by the first optical grating 132. Accordingly, the detector unit 140 can be designed to perform optimum setting for the detecting system differently from the background art shown in Fig. 11, so that the size of the detector unit 140 can be reduced. At the same time, heat due to the sheet light source 120 is not generated in the detector unit 140. Accordingly, it is unnecessary to consider thermal strain of the detector unit 140 due to the sheet light source 120, accurate position detection can be performed without position error, etc. caused by such thermal strain.

In addition, because the positional relation between the sheet light source 120 and the scale 110 is fixed so that the scale 110 per se emits light, it is unnecessary to align the scale 110 with an illuminating system which illuminates the scale 110 with light. Accordingly, tolerance to alignment of the scale 110 with the detector unit 140 is enlarged so that the robust photoelectric encoder 100 can be achieved.

Although this embodiment has been described in the case where the EL light-emitting films 122 are used as the sheet light source 120, the invention is not limited thereto. As a modification of this embodiment, a plurality of point light sources (e.g. LED's) may be arranged at regular intervals in the direction X of the measurement axis of the scale.

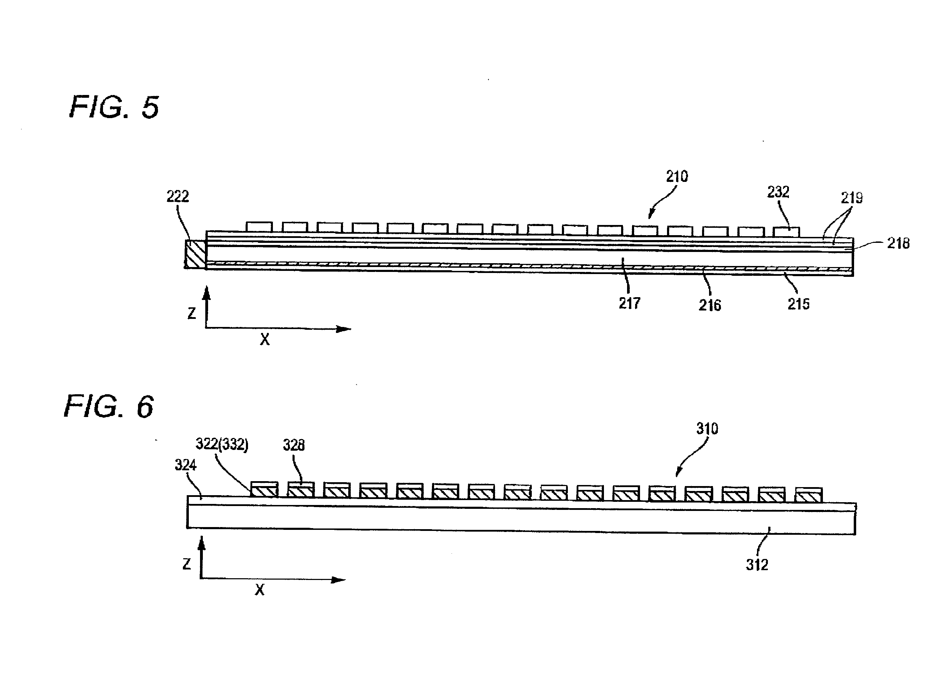

A second embodiment of the invention will be described next with reference to Fig. 5.

Although the first embodiment has been described in the case where the light source is used as a sheet light source, this embodiment shows the case where a sheet light source is formed from a point light source provided at an end portion of a scale. Incidentally, this embodiment shows a photoelectric encoder using the same three-grating theory as in the first embodiment.

The scale 210 roughly includes a reflecting sheet 215, a light guide plate 217 (light guide unit), a diffusion sheet 218, two prism sheets 219, and a first optical grating 232. The light guide plate 217 has a concave-convex pattern in its lower surface. An LED 222 which is a point light source is provided on one end side of the light guide plate 217 (at an end portion of the scale 210). The reflecting sheet 215 is disposed so that surfaces of the reflecting sheet 215 and the concave-convex pattern 216 of the light guide plate 217 are aligned with each other. Accordingly, light output from the LED 222 is reflected on the concave-convex pattern 216 and the reflecting sheet 215. The reflected light is diffused uniformly by the diffusion sheet 218 disposed on the upper surface of the light guide plate 217 to thereby form a diffusive light source. The diffused light passes through the two prism sheets 219 having prisms perpendicular to each other, so that the diffused light is guided vertically (upside (Z direction) in Fig. 5).

In this embodiment, because the point light source is used in this manner, power consumption can be reduced compared with the case where a sheet light source is made to emit light directly, so that the influence of heat on the detector unit can be reduced further. At the same time, because the point light source which is a heat generation source can be disposed at the end portion (local portion) of the scale 210 to make it easy to discharge heat and make it possible to reduce thermal strain of the scale 210 per se, more accurate measurement can be made.

Although this embodiment has been described in the case where one LED 222 is used as a point light source, the point light source is not limited to the LED, and point light sources disposed side by side may be used. Or a linear light source such as a small-size fluorescent tube may be used in place of the point light source. Or the point light source need not be provided at one end, that is, point light sources may be provided at opposite ends. Or configuration may be made so that the prism sheets 219 are removed. Or light of the point light source may be guided to only portions corresponding to transparent portions of the first optical grating to thereby form the first optical grating directly.

A third embodiment of the invention will be described next with reference to Fig. 6.

In this embodiment, a sheet light source per se forms a first optical grating. Specifically, portions of EL light-emitting films 322 are used as transparent portions of the first optical grating 332. Accordingly, the thickness of the scale 310 can be reduced while a process of forming the optical grating is dispensed with. Incidentally, this embodiment shows a photoelectric encoder using the same three-grating theory as in the first and second embodiments.

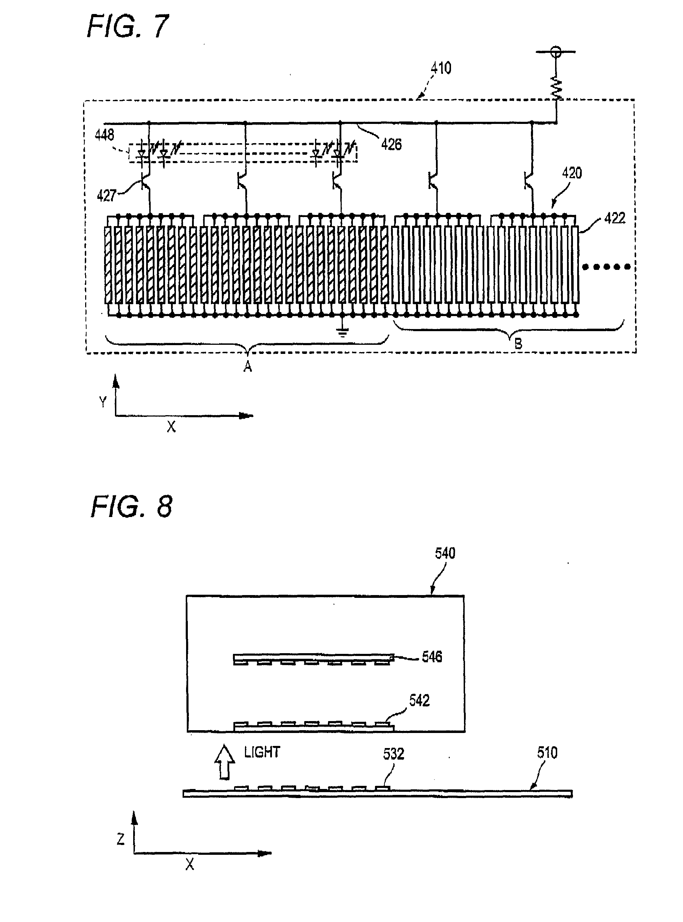

A fourth embodiment of the invention will be described next with reference to Fig. 7.

Although the aforementioned embodiments have been described in the case where the sheet light source is made to emit light on the whole surface of the scale, this embodiment attains power saving, for example, by partially driving strip-shaped EL light-emitting films 422 used as a sheet light source. Incidentally, this embodiment shows a photoelectric encoder using the same three-grating theory as in the first to third embodiments.

That is, in this embodiment, a photo sensor array 427 is further provided between the EL light-emitting films 422 and electrode films 426 as wiring extending in the direction X of the measurement axis of a scale 410 in comparison with the first and third embodiments. When an LED array 448 is provided on a surface of a detector unit face to face with the scale 410, the photo sensor array 427 can perform control so that only a portion A of the EL light-emitting films 422 which is in the sheet light source 420 and which is disposed face to face with the detector unit emits light (although Fig. 7 shows the case where the LED array 448 on the detector unit side is shifted in the Y direction from the photo sensor array 427 in order to avoid overlapping of these in the drawing, it is preferable that these are practically disposed face to face with each other directly). That is, the photo sensor array 427 and the LED array 448 serve as a control unit which performs control so that only the portion A of the sheet light source 420 face to face with the detector unit emits light. Incidentally, other portions in this embodiment are the same as those in the first embodiment, so that description thereof will be omitted.

Controlling the operation of the photoelectric linear encoder according to this embodiment will be described below.

When the photoelectric linear encoder is started, the LED array 448 on the scale 410 side surface of the detector unit is turned on.

As a result, light of the LED array 448 is input to the photo sensor array 427 in the portion A provided face to face with the LED array 448, so that the photo sensor array 427 is switched to a conducting state. Accordingly, a current flows in EL light-emitting films 422 corresponding to the conducting portion of the photo sensor array 427, so that the EL light-emitting films 422 emit light. That is, EL light-emitting films 422 corresponding to only the portion A of the sheet light source 420 provided so as to be integrated with the scale 410 and disposed face to face with the detector unit can be made to emit light. Output light due to the light emission is modulated by the first optical grating. The modulated light is input to the detector unit. On this occasion, the modulated light is further modulated by the second optical grating and received by the photo acceptance element through the optical grating.

For this reason, heat generated in the EL light-emitting films 422 of the portion A can be made sufficiently lower than heat generated in the sheet light source 420 formed from the whole EL light-emitting films 422 of the portions A and B. That is, the quantity of heat generated on the scale 410 is reduced as well as power saving is obtained, so that the influence of heat on the detector unit can be reduced as much as possible. Such an effect is not limited to the EL light-emitting films used in the first and third embodiments. In the case of a plurality of point light sources described in the modification of the first embodiment or in the case of point light sources provided on opposite end surfaces as described in the second embodiment, the means described in this embodiment can be used to obtain the same effect.

Incidentally, for example, a magnet may be provided in the detector unit and a unit for magnetically controlling the conducting state of the electrode films may be provided on the scale side without provision of the photo sensor array 427 and the LED array 448. The phrase "only the portion A of the EL light-emitting films 422 face to face with the detector unit" means not only strict "face to face" relation but also confinement to a local portion which is in the sheet light source made from the EL light-emitting films 422 and which is near the detector unit.

Although the invention has been described based on the embodiments, the invention is not limited to the embodiments. That is, it is a matter of course that improvement and change of design may be made without departing from the gist of the invention.

For example, although the embodiments have been described in the case where the photo acceptance element of the detector unit has an optical grating, the invention is not limited thereto. For example, as shown in a fifth embodiment of Fig. 8, an array type photo acceptance element 546 which is a photo acceptance element made from a plurality of pixels can be used while the three-grating theory is applied. In this case, the optical grating can be dispensed with and the size of the detector unit can be reduced further.

Although the embodiments have been described in the case where the detector unit has the second optical grating, the invention is not limited thereto. For example, a lens for collecting and converging light modulated by the first optical grating may be provided in the detector unit so that a theory using two optical gratings for position detection (referred to as two-grating theory) can be applied.

Specifically, in a sixth embodiment shown in Fig. 9, a detector unit 640 may include a lens 642 on the scale 610 side, and an array type photo acceptance element 646 for receiving light collected and converged by the lens 642. In this case, not only can the second optical grating be dispensed with but also position detection can be made with higher resolving power than that in use of the second optical grating.

Alternatively, in a seventh embodiment shown in Fig. 10, a detector unit 740 may include a lens 742 on the scale 710 side, an aperture 743 disposed in the position of a focal point of light once collected by the lens 742, a lens 744 for collecting and converging the light having passed through the aperture 743 again, and an array type photo acceptance element 746 for receiving the light collected and converged by the lens 744. In this case, it is possible to form a telecentric optical system which is a lens system having a principal ray parallel with an optical axis. Accordingly, use of the lenses permits not only high resolving power to be achieved but also tolerance to alignment of the scale 710 with the detector unit 740 to be enlarged further. Incidentally, in the sixth or seventh embodiment, the array type photo acceptance element 640 or 740 may be replaced by a photo acceptance element which is formed so that an optical grating is provided separately.

Although the embodiments have been described in the case where the photoelectric encoder is a linear encoder, the invention is not limited thereto. For example, the photoelectric encoder may be a rotary encoder.

Although the embodiments have been described in the case where some kind of sheet light source is formed, the invention is not limited thereto. Any shape of light source may be used as long as the light source is provided so as to be integrated with the scale. Because it is unnecessary to provide the light source in the detector urit, the operation and effect due to the invention can be obtained without limitation on the light source.

## Claims

1. A photoelectric encoder comprising:
a scale provided with a first optical grating;
a detector unit opposed to the scale; and
a light source integrated with the scale, the light source emitting light to be modulated by the first optical grating and received by the detector unit.

2. The photoelectric encoder according to Claim 1, wherein
the light source is a sheet light source.

3. The photoelectric encoder according to Claim 2, wherein
the sheet light source is made of EL elements.

4. The photoelectric encoder according to Claim 2, wherein
the sheet light source is a diffusive light source which is formed so that light emitted from a point light source or a linear light source provided at an end portion of the scale is guided by a light guide unit and diffused.

5. The photoelectric encoder according to Claim 2, wherein
the first optical grating includes the sheet light source.

6. The photoelectric encoder according to any of the preceding claims, further comprising
a control unit configured to control the light source so that only a portion opposed to the detector unit emits light.

7. the photoelectric encoder according to any of the preceding claims, wherein
the detector unit includes:
a second optical grating configured to modulate light modulated by the first optical grating; and
a photo acceptance element configured to receive the light modulated by the second optical grating.

8. the photoelectric encoder according to any of claims 1 to 6, wherein
the detector unit includes:
a lens configured to collect and converge light modulated by the first optical grating; and
a photo acceptance element configured to receive the light collected and converged by the lens.

9. The photoelectric encoder according to Claim 7, wherein
the photo acceptance element is an array type photo acceptance element made from a plurality of pixels.

10. The photoelectric encoder according to Claim 7, further comprising
an optical grating configured to shield a part of light at regular intervals, the optical grating being provided separately from the photo acceptance element.

11. A method for controlling an operation of a photoelectric encoder including a scale provided with a first optical grating, and a detector unit opposed to the scale, the method comprising:
providing a light source integrated with the scale;
and
controlling the light source so that only a portion opposed to the detector unit emits light.
